# EUROPEAN PATENT APPLICATION

(11) **EP 1 418 760 A1**
(43) Date of publication of application: **12.05.2004**
(21) Application number: 03020997.7
(22) Date of filing: 17.09.2003
(51) Int. Cl.: H04N 7/24, H04N 7/16, H04N 5/00

(54) **System for remote management and control of television distribution systems inside buildings**

(30) Priority: 20.09.2002 IT TO20020823
(71) Applicant: Fracarro Radioindustrie S.p.a., 31033 Castelfranco Veneto (TV) (IT)
(72) Inventor: Polo Filisan, Andrea, 33080 Porcia, Pordenone (IT); Fornasari, Andrea, 21040 Cislago (VA) (IT); Rebuscini, Mario, 24047 Treviglio, Bergamo (IT); Crivellaro, Renato, 35019 Tombolo (PD) (IT)
(74) Representative: Dini, Roberto, Dr. Ing.

(57) **Abstract**

A system for remote management and control of distribution systems of television signals inside buildings of the type that comprises a distribution head (12) of television signals connected to a distribution network (16) of television signals in the building (10) operating through coaxial cable, said distribution network of television signals (16) reaching at least in part of the environments of the building (10) at least part of a plurality of electronic controlled devices (27) inside the building (10). According to the invention, said signal distribution head (12) is associated to an electronic terminal (13) operating as a gateway being apt for bi-directional communication with external telecommunication networks (305) through Internet Protocol to the signals distribution network (16) in the building (10).

## Description

The present invention relates to a system for remote management and control of distribution systems of television signals inside buildings of the type that comprises a distribution head of television signals connected to a distribution network of television signals in the building operating through coaxial cable, said distribution network of television signals reaching a plurality of devices being apt to utilize said signals.

The systems for distribution of television and multimedia signals to condominium or community buildings are widely known and diffused. These systems usually provide different signal input means, such as TV aerials, satellite aerials or cables, which reach signal distribution stations inside the building. The signal in the various environments of the building, in particular in the flats, is distributed by means of a network obtained through coaxial cable.

One usual problem arising in particular for the installers of these distribution systems is how to manage and control them after having been installed. These systems require in fact continuous update due to the continuous requirements of the users concerning new programs, subscriptions, as well as regulation and maintenance operations, above all when alarms are caused by any operating faults.

These remote management and remote control problems are also associated to any kind of apparatus in a position to exchange signals with a remote station.

Remote management and remote control systems of television head stations and other electronic controlled apparatuses are known, but said systems usually utilize proprietary technologies and protocols, which make it difficult to obtain flexible application under all circumstances.

It is the aim of the present invention to solve the above drawbacks and provide a system for remote management and control of distribution systems of television signals inside buildings, which has an improved and more efficient performance with respect to the existing solutions.

In this frame, it is the main object of the present invention to provide a system for remote management and control of distribution systems of television signals inside buildings, which provides a remote management and remote control service based on an open standard that can be accessed by different systems.

A further object of the present invention is to provide a system for remote management and control of distribution systems of television signals inside buildings, which provides the use of a physical distribution support of the signal, so as to easily reach any location of the building without requiring any further installation operations and further costs.

In order to achieve such aims, it is the object of the present invention to provide a system for remote management and control of distribution systems of television signals inside buildings, incorporating the features of the annexed claims, which form an integral part of the description herein.

Further aims, features and advantages of the present invention will become apparent from the following detailed description and annexed drawings, which are supplied by way of non limiting example, wherein:
- Fig. 1 shows a basic diagram of a building implementing the system for remote management and control of distribution systems of television signals inside buildings, according to the invention;
- Fig. 2 shows a block diagram of the inner execution of an electronic terminal or building gateway pertaining to the system for remote management and control of distribution systems of television signals inside buildings, according to the invention;
- Fig. 3 shows a block diagram of the inner execution of a general transponder pertaining to the system for remote management and control of distribution systems of television signals inside buildings, according to the invention;
- Fig. 4 shows a total view of the system for remote management and control of distribution systems of television signals inside buildings, according to the invention;
- Fig. 5 shows a block diagram of the connection between the electronic terminal and the sub-networks of the system for remote management and control of distribution systems of television signals inside buildings, according to the invention.

The inventive idea consists in providing an electronic terminal, otherwise called gateway, having a technology compatible with Internet Protocol, in a position to ensure remote management of television heads according to different procedures and perform the functions of a "building gateway", i.e. as an input and output gateway for compatible TCP/IP devices connected to it for remote control and remote management applications.

The system according to the present invention is to implement said gateway during the installation or update of a distribution head of the television signals, in a position to visibly exhibit said distribution head as well as other likely devices connected to the coaxial cable and made IP compatible through Internet or by direct connection.

According to a further inventive features of the system according to the present invention, the connection capacity according to Internet Protocol is extended to the lowest level in the coaxial cable network, i.e. directly to the level of a single device and not only to the gateway; every aerial socket, in fact, is going to form a node of the building network, with its own IP address. Each node is visible by the gateway and the other nodes, the same as it happens in a LAN (Local Area Network) of a Personal Computer; utilizing, however, the normal television system through coaxial cable.

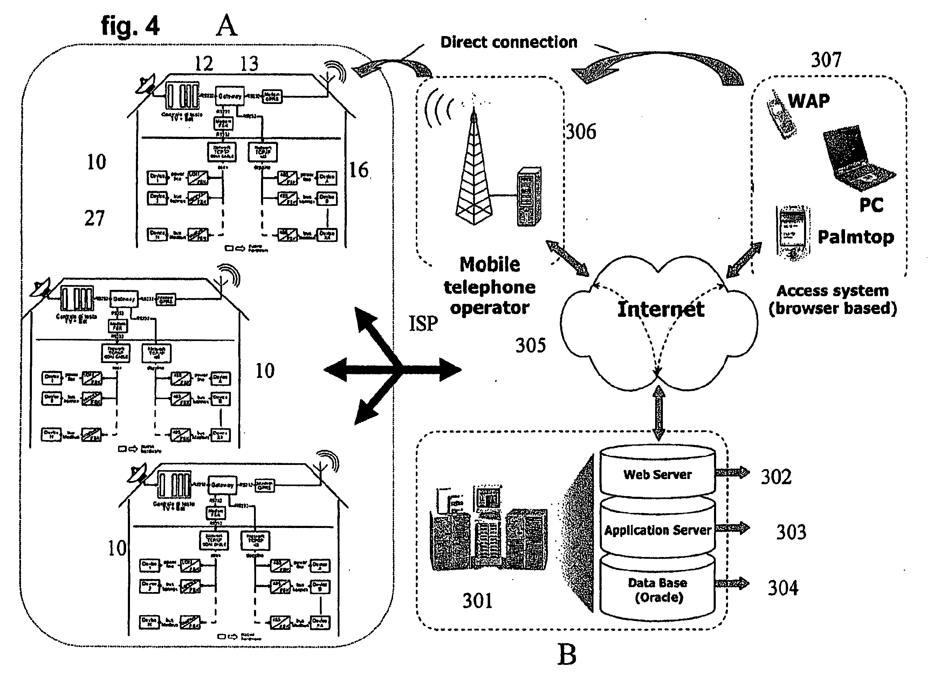

The remote management and control system of distribution systems of television signals according to the present invention consists substantially of two main subsets, as indicated in Figure 4.

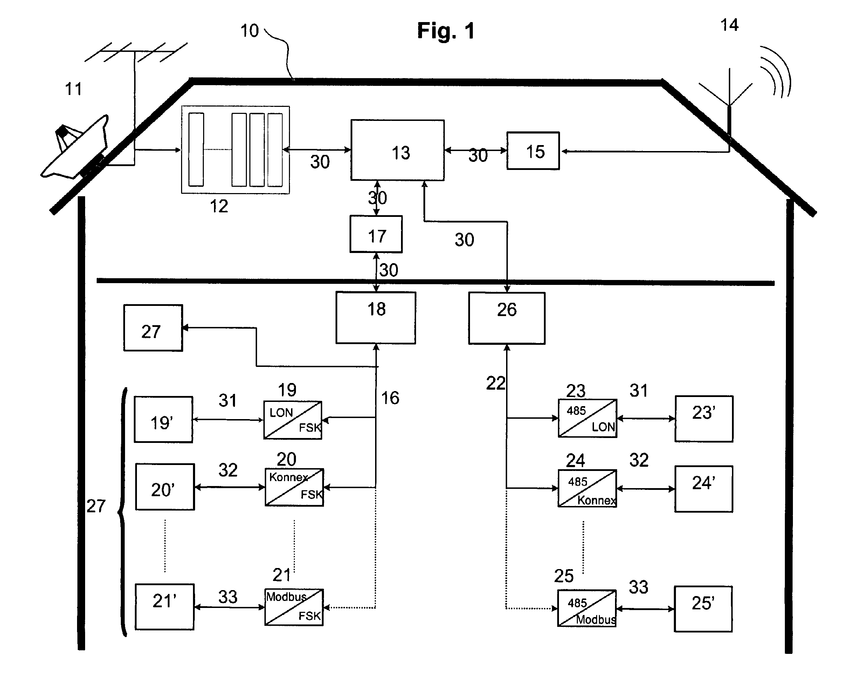

A first subset A comprises a plurality of signals distribution networks 16 spread over the territory; each one of them may be associated to a different building 10 or community. Each one of said distribution networks 16, as better detailed in figure 1, comprises a head station 12 for distribution of satellite signals as well as of terrestrial, digital or analogic signals, a plurality of domestic devices 27, television sets, and also other domestic electronic apparatuses connected to each other and to a gateway device 13 by coaxial cable. This gateway 13 provides for TCP/IP connection through Internet network 305 to an Internet Service Provider, i.e. ISP and therefore to the remote server, obtaining the appropriate packaging operations and vice-versa of non TCP/IP protocols adopted by those devices without TCP/IP stack, and package routing.

A second subset B provides for service management linking up with an Application Service Provider (ASP) 301, charged on one side to manage the volume of data collected by various controlled apparatuses (peripheral units), in particular by the head stations 12, organize and supply them through an appropriate interface to the utilities involved and, on the other side, obtain TCP/IP connection with the building gateways and act as a remote intelligence for controlling each device.

Figure 1 is representing the first subsystem A related to a building 10.

This building 10 is equipped with a group of aerials 11 for receiving terrestrial and/or satellite signals, connected to a satellite and TV head station 12. An aerial 14 is apt to receive terrestrial radio signals, such as GSM and GPRS signals and transmit them to an appropriate GPRS modem 15.

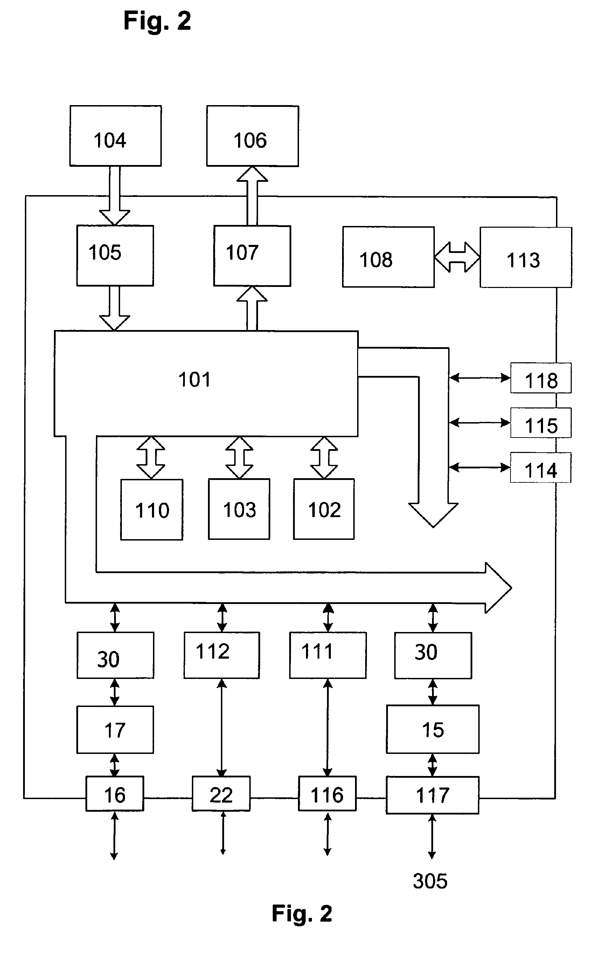

This satellite and TV head station 12 and GPRS modem 15 exchange signals with a gateway device 13 as detailed in Figure 2 through an RS232 connection 30.

The above gateway device 13 is connected to a signals distribution network 16 obtained by means of a coaxial cable usually available in the building 10 for normal distribution of the television signal. Connection occurs through a modem 17 utilizing a digital modulation, such as FSK modulation, as usual for transmission through coaxial cable, said modem 17 being connected to a terminal 18 of the distribution network of television signals 16.

Therefore, starting from the gateway 13, an integrated network of devices inside the building (like a LAN) is connected to it, which utilizes the distribution network 16 through coaxial cable used for distribution of the television signals for connecting the TV stations contained in the head station 12 and a set of other domestic electronic controlled devices 27 and hosts in a position to use TCP/IP as a communication protocol.

Should a domestic device 27 not be "IP compatible", i.e. not implementing TCP/IP in a native manner as the communication protocol and data carrier, but use exclusive or different protocols, it will be necessary to insert an appropriate electronic device, called transponder, between the aerial socket and the device itself, acting as an IP node in the building network and converting from the TCP/IP protocol to the exclusive protocols as required from time to time (and vice-versa).

Various transmodulation apparatuses 19, 20, 21 are in fact located over the distribution network 16. The transmodulation apparatus 19 demodulates the FSK coding utilized on the network 16 and remodulates according to LON for waves carrier communication 31 on line with a domestic device 27, in particular a device 19' being apt to communicate according to such a protocol, e.g. an electric appliance. The transmodulation apparatus 20 demodulates the FSK coding used on the network 16 and remodulates a standard being apt for transmission through a Konnex bus 32 to a device 20', whereas the modem 21 and device 21' communicate through a Modbus bus 33.

However, other physical means (such as Ethernet or RS485 bight) may also be used along with the coaxial cable, so as to form various subnets. Figure 1 illustrates in fact for completeness a TCP/IP distribution network with an RS485 bight 22, which may also be available in the building 10 and is interfaced by the interface 26 with RS23 protocol to the gateway 13 according to the present invention. Alike the distribution network 16 through coaxial cable, the subnet 22 with RS485 bight has the modems 23, 24, 25 operating as an interface between the above RS485 bight and the relevant bus suited for the devices 23', 24', 25', providing at the same time for conversion from TCP/IP protocol to the protocols used by these devices (and vice-versa).

Therefore, the remote management system according to the present invention consists essentially of the gateway device 13, transponder devices such as the device 19 and distribution network of television signals through coaxial cable 16, normally pre-existing in the building 10, which represents the physical means through which both the data and instructions exchanged between the gateway 13 and the transponders are conveyed.

As shown in Figure 2, the gateway device 13 comprises:
- a Central Processing Unit (CPU) 101;
- a Random Access Memory (RAM) 102;
- an Elettrically Erasable Programmable Read Only Memory (EEPROM) 103;
- a FLASH Memory 110
- an input peripheral unit 104, such as a keyboard, operated by a relevant controller 105;
- an output peripheral unit 106 operated by a relevant controller 107;
- a feeder 108 to be connected to a feed socket 113 for electric supply to the electronic components of the terminal;
- a GSM or GPRS modem 15, preferably an inner one to be connected to an aerial socket 117 for connection to Internet / connection to an Internet Service Provider (ISP);
- an FSK model 17 (Frequency Shift Keying) for transmitting the signals through a coaxial cable
- a standard Ethernet 10baseT gateway 111 with relevant RJ45 connector 116 for connection to a LAN;
- an RS485 gateway 112 for connection to external apparatuses utilizing this bus for communication;
- a standard RS232 serial gateway 114, through which connection to the electronic terminal is possible for its configuration;
- additional interfaces for future expansions, comprising one or more USB gateways 115 (Universal Serial Bus) and a connector 118 for PCMCIA or Compact Flash cards.

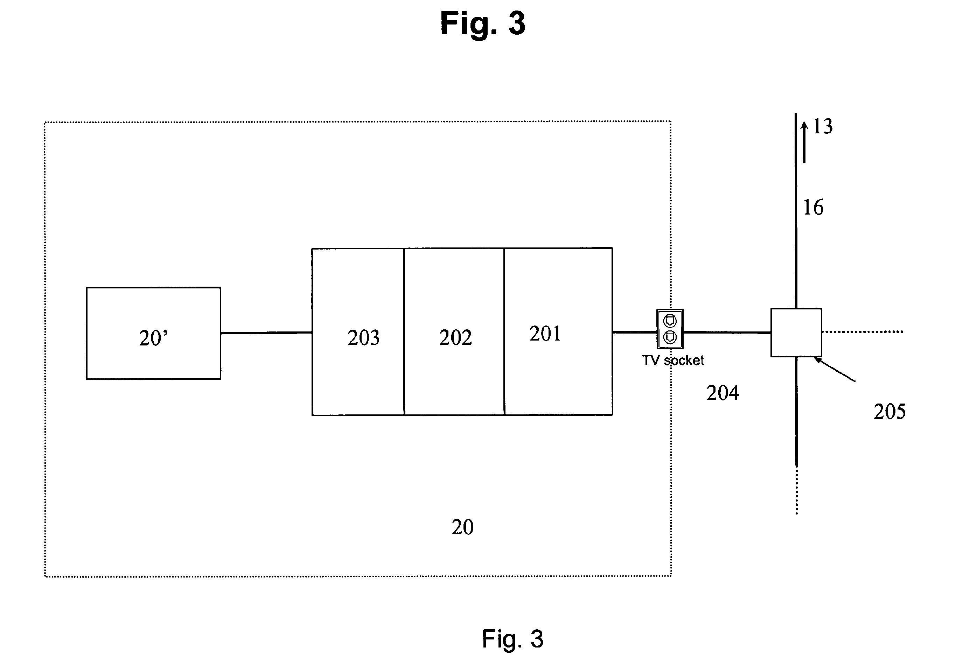

Therefore, the building gateway 13 is an electronic terminal equipped with a complete TCP/IP stack, i.e. fully compatible and interoperating with any router of a third party. It is apt to operate in alternative to a Personal Computer for remote control and remote management through Internet, both in the industrial and civilian environment. Since it is a very sturdy embedded device, in a position to operate without human interaction and not based on operative systems, such as Windows, it is more reliable and stable than a Personal Computer. Figure 3 is representing the transponder 20, which comprises:
- an FSK modem 201, for correct modulation/demodulation of the signals transmitted through the coaxial cable 16;
- applicators 202 for addressing and communication management according to Ethernet and TCP/IP standards, as well as for TCP/IP protocol conversion to one of the exclusive protocols utilized by the devices 27 connected to the coaxial cable 16;
- a physical logic interface 203 towards a specific bus (Konnex, Modbus, LON), which differs from time to time according to the device 20' to be interfaced.

Access to said transponder 20 from the distribution network through coaxial cable 16 is provided by means of a plane switch 205 and aerial socket 204. Obviously, the transponder 20 is not required in the instance of devices being apt to be connected directly to the coaxial cable through the aerial socket 204.

Therefore, in the remote management system according to the present invention, the gateway 13 will route the data and requests from the various domestic devices 27 or nodes connected to the network 16 of the building 10 to the public sector (ASP) and vice-versa, and shunt every instruction from ASP to the device provided. To this purpose, as many TCP/IP gateways as the number of connected apparatuses are used. An association table of the gateway numbers and private IP addresses of the devices is stored inside the gateway 13 (e.g. gateway 200 = IP address 10.1.1.200).

The gateway 13 also performs a router function, routing the requests pertaining to various sub-networks inside the same building, such as coming from nodes connected to different media, e.g. coaxial (IP address 10.1.x.y), RS485 (10.2.z.w) or Ethernet (10.3.j.k).

The gateway 13 also operates as a repeater for the whole network 16 inside the building visibly exhibiting any current communication to all the devices 27 connected to the coaxial cable of the network 16. Repetition of the packages also occurs to different physical media. Thus, all the nodes 19, 20, 21 connected to the coaxial cable of the network 16 are visibly exhibited to each other and, for instance, to the nodes 23, 24, 25 of the subnetwork 22 in RS485; the gateway 13 has nothing to perform in case the communication is directed to the network 16 inside the building.

A few communication types are reported by way of example here below, which can be executed by means of the system according to the present invention:
Node-to-node communication (10.1.1.200 - 10.1.1.201): in this event, the communication will remain private inside the sub-network and the gateway not perform any action on the package save for repeating it in all physical TCP-IP/Ethernet media.
   - Node-to-node communication (10.1.1.200 - 10.2.1.201): in this event, the communication will remain private inside the building, but the gateway has to route the package 10.1.x.x to the sub-network 10.2.x.x.
   - Node to ASP communication: in this event, the communication will be routed to Internet through the gateway after having obtained a PPP connection (i.e. utilizing Point-to-Point Protocol) through the inner modem.
   - ASP to node communication (identified by the IP of the gateway 200): in this event, the communication will be routed by the gateway to the node associated to the gateway 200. The IP address-gateway association resides in the gateway, whereas only the gateway number is stored in the ASP server.

Another important function of the gateway 13 is to warrant access safety to Internet and for direct connection. The data reside in the hosts devices only, whereas the gateway 13 operates solely as a "proxy server". The IP address of the gateway 13 is assigned by ISP (Internet Service Provider), whereas all other devices 19-21 (nodes) have a private IP address, i.e. not visible from outside, which is configurated during the installation stage.

It is not necessary for the above devices 27 to be permanently "on line": a connection will only be established if an Internet application requires access to the device, which operation occurs quite clearly for the final user.

The gateway 13 has to be configurated, i.e. the parameters required for its correct operation have to be stored in it, among which:
- Telephone number of the access server to Internet (ISP), usemame and password;
- IP static addresses of ASP 301;
- Private IP of the gateway and host devices;
- TCP/IP gateways associated to each IP address of the nodes;
- Telephone numbers of the servers in case of direct call from the servers (CALL ID);
- E-mail addresses and telephone numbers for sending alarm indications.

Configuration of the gateway 13 may occur according to various procedures: automatically, if the terminal is programmed for connection to a predetermined server from which the configuration should be downloaded on its first connection, or manually through a local or remote connection activated by the installer during the system startup or update.

Download of application programs, configuration files, etc., may also be executed from the remote server to dedicated memory areas inside the gateway, in order to implement new functions. For this transfer a FTP protocol (File Transfer Protocol) is used.

Connection to Internet occurs through an access server to Internet, i.e. Internet Service Provider or ISP. Communication with said ISP server occurs through the 15 GSM or GPRS modem of the gateway 13 and cellular network of a mobile telephone operator.

Naturally, connection to ISP may also occur through a public telephone line, a digital line or electric line. According to the connection mode, the gateway 13 has an adaptor in a position to establish connection with the provider (ISP), such as a particular connection through telephone cable, in which case an ISDN (Integrated Switched Digital Network) o ADSL (Asymmetric Digital Subscriber Line) adaptor, etc, may be used.

Figure 4, as already appreciated, is representing a complete system architecture, where the public subsystem B can be seen, comprising the Application Service Provider 301, which comprises a Web Server 302 for managing the accesses, supply of an appropriate HTML interface, an Application Server 303 for managing both the indications and alarms, as well as for virtual control of the equipment and a database 304 for logistic storage functions, historical data and statistics management.

The Application Service Provider or ASP 301 is connected to Internet network 305 communicating with mobile telephone operators 306 and browser access systems 307, such as Personal Computers and Palmtops.

A complete Dataware housing service can be offered through ASP 301 for centralized acquisition and management on one sole database of the database 304 and of all the data from any electronic device 27 made compatible with TCP/IP protocol. This will ensure a better evaluation of collected information.

The user can have access to the server 302 of the ASP provider 301, e.g. through a computer equipped with a standard browser (Internet Explorer or Netscape) and a normal telephone connection, or using the latest generations of wireless apparatuses (such as PDA - Personal Digital Assistant - fitted with a GSM or GPRS modem).

ASP provider 301 provides specific software or application programs, having the purpose of:
- supplying the user with a simple intuitive graphic interface allowing interaction with the application and devices 27 or 12 connected to the network 16;
- communicating with the devices 27 or 12 connected to the network 16;
- using the database 304 for data storage and/or retrieval.

These applications may be installed for operation on different platforms and they are independent from a specific database or logics of the remote controlled devices.

In particular, ASP 301 is responsible for:
- correct interpretation of users' requests;
- recording new users and new systems;
- the choice, purchase and installation of both the hardware and software required by the equipment;
- communication with the various systems;
- managing possible communication errors;
- control and mainteance of the servers;
- backup and safety of acquired data;
- communication with the database 304 for data storage and retrieval.

As to the last point, ASP 300 implements and manages the database 304 based on the requirements expressed by customers. This operation may include services, such as:
- differentiation of access levels;
- report of indications and alarms (such as an empty vending machine);
- organisation of a historical file;
- extrapolation of statistics and graphics;
- customer branding.

Specific data subsets or supersets may be defined and distributed after their acquisition and analysis both to public and/or private web sites as well as according to typical database formats for use in third parties' systems.

The gateways 13 communicate with the application residing on the server 302 of ASP 301 using the protocol TCP/IP. Each gateway 13 is continuously listening on a determined gateway waiting for the application server 302 to place a connection request. When the request is executed, a TCP/IP socket is formed and the application sends the controls set to the gateway 13. The gateway 13 addresses every instruction to the addressed device 27 or 12 waiting for response from each device. As soon as all the responses have arrived, the gateway 13 will insert them in a TCP-IP frame and send them to the application server 302. The application server 302 receives and verifies the responses; if they are found correct the connection is closed, otherwise the instructions are returned. In case of a faulty reception the transmission is repeated for a defined number of times; should the system go on replying in a wrong manner at the end of this defined time, then a problem is signalled to the user.

Before being packed according to TCP/IP protocol specifications and sent, both the data and instructions transmitted during the communications between the application server 302 and the systems are appropriately coded according to a new protocol, which will provide for:
- reaching all the devices connected to the gateway 13;
- inserting instructions addressed to different devices in the same TCP/IP package;
- carrying any instructions, in order to communicate with always new devices physically connectable to the gateway 13.

As to the communication between the Application Server 302 and the final user, typical protocols of Internet "navigation" are used, such as HTTP (Hyper Text Transfer Protocol) protocol.

The remote access procedures to the gateway 13 are basically of two types:
- by direct telephone connection, which can be executed with various apparatuses/terminals (GSM, GPRS, PSTN) or other (ADSL, ETHERNET, etc.) according to the modem or adaptor installed inside the gateway 13;
- by web, connecting to the web server 302 of ASP 301 by means of a standard browser.

In the first instance safe access is warranted by adopting one username and local password + a CALL ID (caller's telephone number). In the second case, on the contrary, application on the side of ASP 301 will take charge of connection safety. At any rate, appropriate cryptic algorithms may be adopted for increasing the privacy level, if necessary.

Local access to the gateway 13 is also possible through an appropriate terminal or computer equipped with an appropriate interface (such as TTL/RS232) included in the installer's kit. Moreover, the gateway 13 has the possibility of sending SMS, e-mail e fax quite autonomously for signalling alarms directly to the installer/service man in charge of the system and/or to the final user.

Besides the advantages deriving from an improved management of the service network, a remunerated service may be offered to both commercial and residential customers. Two main service classes are:
Company services: the service/maintenance network of a managing company, rather than a municipality company or local institute, can have access to the service in a mobile mode through the Internet gateway of ASP 301, using a mobile telephone rather than a PDA, above all following introduction of the new terminals (GPRS - UMTS), making the following activities particularly efficient and advantageous:
   - supervision of electric actuations;
   - remote reconfiguration of television control stations;
   - remote reading and programmation of counters;
   - monitorage of lifts and central heating systems;
   - control of the activity state of an automatic vending machines network.
Utility services: the system has been conceived to be easily expandable and in a position to ensure connection and consequently remote management of many devices by the final user through appropriate transponders to be obtained every time a connection of a new non TCP/IP compatible device to the building network is required, thus obtaining most variable applications:
   - remote activation of alarm systems;
   - heating activation/disactivation of a mountain cottage;
   - access control through webcam;
   - heat accounting;
   - temperature setting;
   - remote medical service (e.g. arterious blood pressure pickup, sugar values, holter data download);

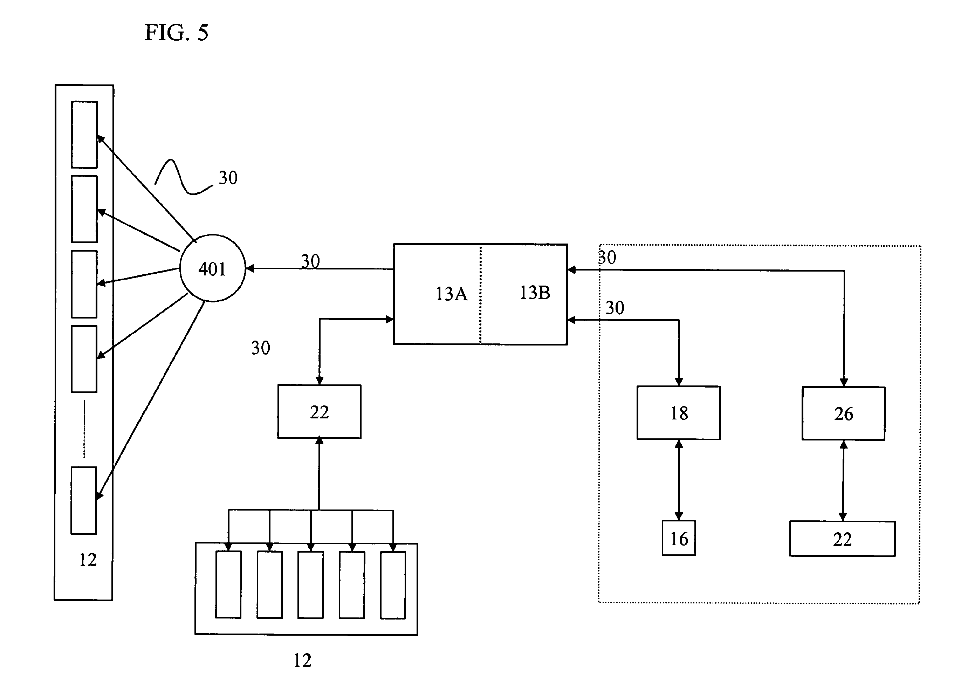

In Figure 5 a block diagram is represented indicating how the gateway 13 is able to manage different sub-networks simultaneously, which use different physical means for connecting the devices (coaxial cable 16, RS485 blight 22 or even Ethernet).

The head station 12, i.e. the set of television stations represents one of these sub-networks.

In the sub-network formed by the head station 12, connection may be of two types: a BUS and a STAR one. Figure 5 is illustrating a star configuration, which is a physical addressing procedure warranted by a switch 401 serving up to 12 stations inside the head station 12. This ensures remote control of all the old stations already installed with a simple retrofit operation, without any change to their hardware or software, but rather utilizing the residing firmware. Figure 5 is also illustrating an RS485 bus configuration alike the network 22 for connection with a low level addressing procedure, being apt to be implemented also with new stations.

As to the communication procedures between the gateway 13 and television heads 12, the gateway 13 has to interpret the contents appropriately formatted of the arriving TCP/IP package from the Application Service Provider 301 and route the data to the addressed modules, wait for responses, format the data and send them to ASP 301 for submission to the final user.

In conclusion, the gateway 13 can be thought as a device formed by two sections, one indicated with 13A in Figure 5, dedicated to the management and control of the head 12 for distribution of the television signals, and another section 13B having in fact the functions of a "building gateway" and router for all those TCP/IP devices 27 connected compatible with it (through coaxial cable 16 and/or other physical media, such as the RS485 bus), operating with addressing and communication procedures respectful of TCP/IP standards and Ethernet. Wherever necessary, i.e. for those products without a TCP/IP stack, the section 13B will also perform the appropriate encapsulating and decapsulating operations of non TCP/IP protocols. The section ensuring connection outside the building, i.e. TCP/IP connection to the Internet Service Provider and consequently to the remote server of ASP 301, on the contrary, is a common one.

From the above description the features of the present invention as well as the relevant advantages thereof are clear.

Advantageously, the system for remote management and control of distribution systems of television signals inside buildings according to the present invention ensures access to the control of the station and eventually of other nodes utilizing the pre-existing network through coaxial cable for the distribution of television signals.

The use of the coaxial cable for transmitting the data allows a considerable installation saving for the buildings with a central aerial system already available, since neither installation of new cables nor invasive operations with consequent masonry works are necessary. Incidentally, the coaxial cable is undoubtedly a very good transmission means both for its immunity to interferences and high passband (its maximum throughput is in the order of MegaByte transmission per second).

All this represents a considerable advantage, above all in the case of large users (condominiums, hotels, communities), where a signals distribution network through coaxial cable reaching every single flat/room is already existing, since no further expensive cabling works will be required.

The gateway represents a valid alternative to personal computers; though less expensive it can be customized and reprogrammed for adapting to various applications, in order to comply with always new and updated service requirements as the devices will be connected to it.

Through the building gateway and Internet remote management system a whole set of new services can be made available to customers, consisting above all of technical installers and system managing companies of the buildings spread all over the territory.

Among their benefits, the following ones should be mentioned by way of example:
- reduced operation times and costs;
- less unproductive calls (the first call for understanding the nature of the problem would be eliminated; in many cases the operation would also loose its emergency requisites);
- increased efficiency and competitiveness of the installer/service man on the market;
- better management of the systems park with the use of a central database to be managed by the user.

It is obvious that many changes are possible for the man skilled in the art to the system for remote management and control of distribution systems of television signals inside buildings described above by way of example, without departing from the novelty spirit of the innovative idea, and it is also clear that in practical actuation of the invention the components may often differ in form and size from the ones described and be replaced with technical equivalent elements.

## Claims

1. A system for remote management and control of distribution systems of television signals inside buildings of the type that comprises a distribution head (12) of television signals connected to a distribution network (16) of television signals in the building (10) operating through coaxial cable, said distribution network of television signals (16) reaching at least in part of the environments of the building (10) at least part of a plurality of electronic controlled devices (27) inside the building (10), **characterized in that** said signal distribution head (12) is associated to an electronic terminal (13) operating as a gateway being apt for bi-directional communication with external telecommunication networks (305) through Internet Protocol to said signals distribution network (16) in the building (10).

2. A system for remote management and control of television signals inside buildings, according to claim 1, **characterized in that** said electronic terminal (13) is apt to visibly exhibit to part of said external remote communication networks (305) said signals distribution network through coaxial cable (16) as addressed network according to Internet Protocol.

3. A system for remote management and control of distribution systems of television signals inside buildings, according to claim 2, **characterized in that** said addressed network according to Internet Protocol has for nodes the head station (12) and domestic devices (27) connected to the distribution network through coaxial cable (16).

4. A system for remote management and control of distribution systems of television signals inside buildings, according to claim 3, **characterized in that** said Internet Protocol not compatible devices (19', 20', 21) are connected to the network (16) by means of transmodulation devices (19, 20, 21).

5. A system for remote management and control of distribution systems of television signals inside buildings, according to claim 4, **characterized in that** said transmodulation devices (19, 20, 21) are apt to communicate on one side (201) according to the coding of the network (16) through coaxial cable and, on the other side (203), according to the coding of a local bus connected to the domestic devices (27).

6. A system for remote management and control of distribution systems of television signals inside buildings, according to the previous claim, **characterized in that** the coding used on the network (16) through coaxial cable utilizes a digital modulation, in particular FSK modulation.

7. A system for remote management and control of distribution systems of television signals inside buildings, according to the previous claim, **characterized in that** said local bus connected to the domestic devices (27) is a Konnex bus or a power line or Modbus or other ones, also wireless.

8. A system for remote management and control of distribution systems of television signals inside buildings, according at least to claim 4, **characterized in that** said transmodulation apparatus is connected downstream of the TV socket.

9. A system for remote management and control of distribution systems of television signals inside buildings, according at least to claim 4, **characterized in that** said electronic terminal (13) comprises a stored association table of the gateway numbers and private IP addresses of the devices (27).

10. A system for remote management and control of distribution systems of television signals inside buildings, according at least to claim 4, **characterized in that** said electronic terminal (13) also performs a router function, routing the requests pertaining to various sub-networks inside the same building (10).

11. A system for remote management and control of distribution systems of television signals inside buildings, according at least to claim 4, **characterized in that** said electronic terminal (13) comprises a GSM 15 or GPRS modem for connection to an Internet Service Provider or ISP and a modem (17) using digital modulation, such as FSK modulation for transmitting the signals through coaxial cable.

12. A system for remote management and control of distribution systems of television signals inside buildings, according at least to claim 9, **characterized in that** said electronic terminal (13) also comprises an Ethernet gateway (111) for connection to a LAN and/or an RS485 gateway (112) or an USB gateway (115) for connection to external apparatuses.

13. A system for remote management and control of distribution systems of television signals inside buildings, according at least to claim 9, **characterized in that** said electronic terminal (13) comprises a standard RS232 serial gateway (114) through which it is possible to connect to the electronic terminal (13), in order to configurate it.

14. A system for remote management and control of distribution systems of television signals inside buildings, according to one or more of the previous claims, **characterized in that** said external telecommunication networks are Internet network (305).

15. A system for remote management and control of distribution systems of television signals inside buildings, according to one or more of the previous claims, **characterized in that** the external telecommunication networks are Internet network (305), and that said electronic terminal communicates through said Internet network with an Application Service Provider (301 ).

16. A system for remote management and control of distribution systems of television signals inside buildings, according to one or more of the previous claims, **characterized in that** said Application Service Provider (301) comprises a Web Server (302) for access management, supply of an appropriate HTML interface and an Application Server (303) for managing the signals and alarms, as well as for virtual control of the equipment.

17. A system for remote management and control of distribution systems of television signals inside buildings, according to one or more of the previous claims, **characterized in that** said Application Service Provider (301) also comprises a database (304) for logistic file functions, historical data and statistics management.

18. A system for remote management and control of distribution systems of television signals inside buildings, according to one or more of the previous claims, **characterized in that** the users communicate with the electronic terminal (13) through mobile telephone operators (306).

19. A system for remote management and control of distribution systems of television signals inside buildings, according to one or more of the previous claims, **characterized in that** browser access systems (307), such as personal computers and palmtops, communicate with the electronic terminal (13) through Internet network (305).

20. A system for remote management and control of electronic controlled apparatuses (27) located in buildings equipped with a distribution network of television signals (16) operating through coaxial cable reaching at least in part of the environments of the building (10) at least part of said electronic controlled apparatuses, **characterized in that** said television signals distribution network (16) is associated through communication means and interface (18) to an electronic terminal (13) operating as a gateway being apt for bi-directional communication with external telecommunication networks (305) through Internet Protocol to said signals distribution network (16) in the building (10), in order to ensure remote control of the electronic controlled apparatuses by remote operators by means of access systems (307).

21. A system for remote management and control of electronic controlled apparatuses (27) located in buildings according to claim 20, **characterized in that** one of said apparatuses (27) is a head station (12) for distribution of television signals.

22. A system for remote management and control of electronic controlled apparatuses (27) located in buildings according to claim 20, **characterized in that** the single devices (27) and/or each aerial socket on the distribution network (16) form a network node with its own IP address visible by the electronic terminal (13). A system for remote management and control of electronic controlled apparatuses (27) located in buildings according to claim 22, **characterized in that** the Internet Protocol not compatible devices (19', 20', 21) are connected to the network (16) by means of transmodulation devices (19, 20, 21).

23. A system for remote management and control of electronic controlled apparatuses (27) located in buildings according to claim 23, **characterized in that** said transmodulation devices (19, 20, 21) are apt to communicate on one side (201) according to the coding of the network (16) through coaxial cable and, on the other side (203), according to the coding of a local bus connected to the domestic devices (27).

24. A system for remote management and control of electronic controlled apparatuses (27) located in buildings according to claim 24, **characterized in that** said electronic terminal (13) comprises a GSM (15) or GPRS modem for connection to an Internet Service Provider or ISP access provider and a modem (17) using digital modulation, such as FSK modulation for transmitting the signals through coaxial cable.

25. A system for remote management and control of electronic controlled apparatuses (27) located in buildings according to claim 24, **characterized in that** said external telecommunication networks are Internet network (305), and said electronic terminal is in communication with an Application Service Provider (301) through said Internet network.

26. A system for remote management and control of electronic controlled apparatuses (27) located in buildings according to claim 24, **characterized in that** said Application Service Provider (301) comprises a Web Server (302) for access management, supply of an appropriate HTML interface and an Application Server (303) for managing the signals and alarms, as well as for virtual control of the equipment.

27. A system for remote management and control of electronic controlled apparatuses (27) located in buildings according to claim 24, **characterized in that** said Application Service Provider (301) also comprises a database (304) for logistic file functions, historical data and statistics management.
